# EUROPÄISCHE PATENTANMELDUNG

(11) **EP 4 002 028 A1**
(43) Veröffentlichungstag der Anmeldung: **25.05.2022**
(21) Anmeldenummer: 20207419.1
(22) Anmeldetag: 13.11.2020
(51) Int. Cl.: G05B 19/18, A01D 34/00, G01C 21/16, G05D 1/02

(54) **VERFAHREN ZUM BETREIBEN EINER EINRICHTUNG, EINRICHTUNG UND SYSTEM FÜR EIN MOBILES MOTORANGETRIEBENES BEARBEITUNGSGERÄT MIT INERTIALSENSOREINRICHTUNG**

(71) Anmelder: Andreas Stihl AG & Co. KG, 71336 Waiblingen (DE)
(72) Erfinder: TRINKLE, Simon, 73667 Kaisersbach (DE); VOGT, Tim, 73529 Schwäbisch Gmünd (DE); BUSER, Mario, 6330 Kufstein (AT)
(74) Vertreter: Patentanwälte Ruff, Wilhelm, Beier, Dauster & Partner mbB

(57) **Zusammenfassung**

Die Erfindung bezieht sich auf ein Verfahren zum Betreiben einer Einrichtung (1), wobei die Einrichtung (1) an einem mobilen motorangetriebenen Bearbeitungsgerät (2) angeordnet ist, wobei die Einrichtung (1) aufweist:
- eine Inertialsensoreinrichtung (3), wobei die Inertialsensoreinrichtung (3) mindestens einen Inertialsensor (4) aufweist, wobei der Inertialsensor (4) zum Erfassen einer Inertialgröße (IG) ausgebildet ist, und
- eine Steuereinrichtung (5),
wobei das Verfahren die Schritte aufweist:
a) Betreiben der Inertialsensoreinrichtung (3) in einem Bewegungs-Überwachungs-Betriebsmodus (BUB) zum Überwachen, ob die Inertialgröße (IG) oder eine auf der Inertialgröße basierende Größe ein Bewegungs-Kriterium (BK) erfüllt, wobei das Bewegungs-Kriterium (BK) für eine Bewegung des Bearbeitungsgeräts (2) charakteristisch ist,
b) falls das Bewegungs-Kriterium (BK) erfüllt ist, Betreiben der Inertialsensoreinrichtung (3) in einem Schädigungs-Überwachungs-Betriebsmodus (SUB) zum Überwachen, ob die Inertialgröße (IG) oder eine auf der Inertialgröße basierende Größe ein Schädigungs-Kriterium (SK) erfüllt, wobei das Schädigungs-Kriterium (SK) für eine Schädigung des Bearbeitungsgeräts (2) charakteristisch ist, und
c) falls das Schädigungs-Kriterium (SK) erfüllt ist, Übertragen eines Schädigungs-Signals (SI) mittels der Inertialsensoreinrichtung (3) und Betreiben der Steuereinrichtung (5) in Abhängigkeit von dem übertragenen Schädigungs-Signal (SI).

## Beschreibung

### ANWENDUNGSGEBIET UND STAND DER TECHNIK

Die Erfindung bezieht sich auf ein Verfahren zum Betreiben einer Einrichtung, wobei die Einrichtung an einem mobilen motorangetriebenen Bearbeitungsgerät angeordnet ist, eine Einrichtung, wobei die Einrichtung zur Anordnung an einem mobilen motorangetriebenen Bearbeitungsgerät ausgebildet ist, insbesondere angeordnet ist, und ein System aufweisend eine solche Einrichtung und das Bearbeitungsgerät.

### AUFGABE UND LÖSUNG

Der Erfindung liegt als Aufgabe die Bereitstellung eines Verfahrens zum Betreiben einer Einrichtung, wobei die Einrichtung an einem mobilen motorangetriebenen Bearbeitungsgerät angeordnet ist, einer Einrichtung, wobei die Einrichtung zur Anordnung an einem mobilen motorangetriebenen Bearbeitungsgerät ausgebildet ist, insbesondere angeordnet ist, und eines Systems aufweisend eine solche Einrichtung und das Bearbeitungsgerät zugrunde, wobei das Verfahren und die Einrichtung und somit das System jeweils verbesserte Eigenschaften aufweisen.

Die Erfindung löst diese Aufgabe durch die Bereitstellung eines Verfahrens mit den Merkmalen des Anspruchs 1, einer Einrichtung mit den Merkmalen des Anspruchs 14 und eines Systems mit den Merkmalen des Anspruchs 15. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Betreiben einer, insbesondere elektrischen, Einrichtung ausgebildet bzw. konfiguriert bzw. vorgesehen. Die Einrichtung ist an, insbesondere in, einem mobilen bzw. portablen motorangetriebenen Bearbeitungsgerät angeordnet, insbesondere befestigt, insbesondere ein Teil des Bearbeitungsgeräts. Die Einrichtung umfasst bzw. weist eine, insbesondere elektrische, Inertialsensoreinrichtung und eine, insbesondere elektrische, Steuereinrichtung (Englisch: Controller) auf. Die Inertialsensoreinrichtung umfasst bzw. weist mindestens einen, insbesondere elektrischen, Inertialsensor auf. Der Inertialsensor ist zum, insbesondere automatischen, Erfassen einer Inertialgröße, insbesondere eines Werts der Inertialgröße, ausgebildet bzw. konfiguriert. Das Verfahren umfasst bzw. weist die Schritte auf: a) Betreiben, insbesondere automatisches Betreiben, der Inertialsensoreinrichtung in einem Bewegungs-Überwachungs-Betriebsmodus zum Überwachen, insbesondere nur mittels der Inertialsensoreinrichtung in dem Bewegungs-Überwachungs-Betriebsmodus, ob die, insbesondere erfasste, Inertialgröße oder eine auf der Inertialgröße basierende Größe, insbesondere ein Wert der Größe, ein, insbesondere vorgegebenes, Bewegungs-Kriterium, insbesondere einen Wert des Bewegungs-Kriteriums, erfüllt, insbesondere oder nicht. Das Bewegungs-Kriterium ist für eine Bewegung, insbesondere einen Wert der Bewegung und/oder eine Fremdbewegung, des Bearbeitungsgeräts charakteristisch. b) falls, insbesondere mindestens, das Bewegungs-Kriterium erfüllt ist, bzw. ausgelöst durch die Erfüllung des Bewegungs-Kriteriums Betreiben, insbesondere automatisches Betreiben, der Inertialsensoreinrichtung in einem Schädigungs-Überwachungs-Betriebsmodus zum Überwachen, insbesondere nur mittels der Inertialsensoreinrichtung in dem Schädigungs-Überwachungs-Betriebsmodus, ob die, insbesondere erfasste, Inertialgröße oder eine, insbesondere die, auf der Inertialgröße basierende Größe, insbesondere ein Wert der Größe, ein, insbesondere vorgegebenes, Schädigungs-Kriterium, insbesondere einen Wert des Schädigungs-Kriteriums, erfüllt, insbesondere oder nicht. Das Schädigungs-Kriterium ist für eine Schädigung, insbesondere einen Wert der Schädigung, des Bearbeitungsgeräts charakteristisch. c) falls, insbesondere mindestens, das Schädigungs-Kriterium erfüllt ist, bzw. ausgelöst durch die Erfüllung des Schädigungs-Kriteriums Übertragen, insbesondere automatisches Übertragen und/oder Erzeugen bzw. Generieren, eines Schädigungs-Signals mittels der Inertialsensoreinrichtung und Betreiben, insbesondere automatisches Betreiben, der Steuereinrichtung in Abhängigkeit von dem übertragenen Schädigungs-Signal.

Die Anordnung der Einrichtung an dem Bearbeitungsgerät ermöglicht, dass eine, insbesondere die, Bewegung des Bearbeitungsgeräts eine Bewegung der Einrichtung verursacht. Somit ermöglicht dies das Überwachen mittels der Inertialsensoreinrichtung.

Zusätzlich oder alternativ ermöglicht das Betreiben der Inertialsensoreinrichtung in, insbesondere entweder, dem Bewegungs-Überwachungs-Betriebsmodus oder dem Schädigungs-Überwachungs-Betriebsmodus ein optimales, insbesondere energieverbrauchsoptimiertes, Betreiben der Inertialsensoreinrichtung, insbesondere der Einrichtung, zum Erfassen bzw. Erkennen der Schädigung.

Denn typischerweise kann einer, insbesondere der, Schädigung des Bearbeitungsgeräts eine, insbesondere die, Bewegung des Bearbeitungsgeräts zeitlich vorhergehen. Z.B. kann das Bearbeitungsgerät angehoben werden, bevor das angehobene Bearbeitungsgerät geworfen werden und auftreffen, insbesondere aufschlagen, kann, z.B. beim Beladen eines Fahrzeugs, insbesondere auf eine Ladefläche des Fahrzeugs.

Das Betreiben der Inertialsensoreinrichtung in dem Bewegungs-Überwachungs-Betriebsmodus kann zum Erfassen bzw. Erkennen der, insbesondere anfänglichen, Bewegung ausreichend sein. Aber das Betreiben der Inertialsensoreinrichtung in dem Bewegungs-Überwachungs-Betriebsmodus braucht oder kann nicht zum Erfassen bzw. Erkennen der, insbesondere zeitlich nachfolgenden, Schädigung ausreichend sein. Dies braucht oder kann auch nicht erforderlich sein. Denn das Betreiben der Inertialsensoreinrichtung in dem Schädigungs-Überwachungs-Betriebsmodus kann zum Erfassen bzw. Erkennen der, insbesondere zeitlich nachfolgenden, Schädigung ausreichend sein.

Dabei kann das Betreiben der Inertialsensoreinrichtung in dem Bewegungs-Überwachungs-Betriebsmodus energieverbrauchsarmer als das Betreiben der Inertialsensoreinrichtung in dem Schädigungs-Überwachungs-Betriebsmodus sein.

Somit kann das Betreiben der Inertialsensoreinrichtung in dem Bewegungs-Überwachungs-Betriebsmodus ein energieverbrauchsarmes Betreiben der Inertialsensoreinrichtung, insbesondere der Einrichtung, ermöglichen und der Wechsel bzw. das Versetzen von dem Betreiben der Inertialsensoreinrichtung in dem Bewegungs-Überwachungs-Betriebsmodus zu dem Betreiben der Inertialsensoreinrichtung in dem Schädigungs-Überwachungs-Betriebsmodus kann das Erfassen bzw. Erkennen der Schädigung ermöglichen.

Insbesondere kann die Inertialsensoreinrichtung selbst bzw. alleine, insbesondere ohne die Steuereinrichtung, von dem Betreiben in dem Bewegungs-Überwachungs-Betriebsmodus zu dem Betreiben in dem Schädigungs-Überwachungs-Betriebsmodus wechseln bzw. sich versetzen.

Zusätzlich oder alternativ kann die Inertialsensoreinrichtung, insbesondere zu einem Zeitpunkt, in, insbesondere entweder, dem Bewegungs-Überwachungs-Betriebsmodus oder dem Schädigungs-Überwachungs-Betriebsmodus betrieben werden. In anderen Worten: Die Inertialsensoreinrichtung kann, insbesondere zu einem Zeitpunkt, nur, insbesondere entweder, überwachen, ob das Bewegungs-Kriterium erfüllt ist, insbesondere oder nicht, oder überwachen, ob das das Schädigungs-Kriterium erfüllt ist, insbesondere oder nicht.

Weiter zusätzlich oder alternativ ermöglicht das Verfahren, dass die Steuereinrichtung, insbesondere zeitlich dauerhaft, die Inertialgröße oder die Größe nicht überwachen braucht oder kann.

Insbesondere können die Inertialsensoreinrichtung und die Steuereinrichtung verschieden sein. Zusätzlich oder alternativ können der Bewegungs-Überwachungs-Betriebsmodus und der Schädigungs-Überwachungs-Betriebsmodus verschieden sein. Weiter zusätzlich oder alternativ können das Bewegungs-Kriterium und das Schädigungs-Kriterium verschieden sein.

Der Schädigungs-Überwachungs-Betriebsmodus kann ein Schlag-Überwachungs-Betriebsmodus sein und/oder das Schädigungs-Kriterium kann ein Schlag-Kriterium sein und/oder das Schädigungs-Signal kann ein Schlag-Signal sein. Insbesondere kann das Schlag-Kriterium für einen Schlag, insbesondere einen Wert des Schlags, auf das Bearbeitungsgerät charakteristisch sein.

Solange das Bewegungs-Kriterium nicht erfüllt ist, kann die Inertialsensoreinrichtung in dem Bewegungs-Überwachungs-Betriebsmodus betrieben werden. Zusätzlich oder alternativ braucht oder kann, falls das Bewegungs-Kriterium nicht erfüllt ist, die Inertialsensoreinrichtung nicht in dem Schädigungs-Überwachungs-Betriebsmodus betrieben zu werden. Weiter zusätzlich oder alternativ kann, solange das Bewegungs-Kriterium erfüllt ist, die Inertialsensoreinrichtung in dem Schädigungs-Überwachungs-Betriebsmodus betrieben werden. Weiter zusätzlich oder alternativ braucht oder kann, falls das Schädigungs-Kriterium nicht erfüllt ist, nicht ein, insbesondere das, Schädigungs-Signal mittels der Inertialsensoreinrichtung übertragen werden, und die Steuereinrichtung braucht oder kann nicht in Abhängigkeit von dem übertragenen Schädigungs-Signal betrieben werden.

Der Schritt b) kann zeitlich nach dem Schritt a) ausgeführt werden. Zusätzlich oder alternativ kann der Schritt c) zeitlich nach dem Schritt a) und/oder dem Schritt b) ausgeführt werden. Weiter zusätzlich oder alternativ kann zeitlich nach dem Schritt c) der Schritt a) oder der Schritt b), insbesondere wieder, ausgeführt werden.

Die Einrichtung kann von dem Bearbeitungsgerät verschieden, insbesondere getrennt bzw. separat ausgebildet, sein. Dies kann eine Nachrüstung der Einrichtung an dem Bearbeitungsgerät ermöglichen. Zusätzlich oder alternativ kann die Einrichtung zur, insbesondere lösbaren, Verbindung mit dem Bearbeitungsgerät ausgebildet sein, insbesondere durch eine stoffschlüssige Verbindung, wie eine Verklebung, eine kraftschlüssige Verbindung, wie eine Rast- bzw. Schnappverbindung, und/oder ein formschlüssige Verbindung, wie eine Verschraubung.

Das Bearbeitungsgerät kann boden- und/oder handgeführt, insbesondere handgetragen, sein. Insbesondere handgeführtes, insbesondere handgetragenes, Bearbeitungsgerät kann bedeuten, dass das Bearbeitungsgerät eine Masse von maximal 50 Kilogramm (kg), insbesondere von maximal 20 kg, insbesondere von maximal 10 kg, aufweisen bzw. haben kann. Zusätzlich oder alternativ kann das Bearbeitungsgerät ein Garten-, Forst-, Bau-und/oder Boden-Bearbeitungsgerät sein. Insbesondere kann das Bearbeitungsgerät eine Säge, insbesondere eine Kettensäge, oder ein Hoch-Entaster, oder eine Heckenschere, oder ein Heckenschneider, oder ein Gehölzschneider, oder eine Astschere, oder ein Blasgerät, oder ein Laubbläser, oder ein Sauggerät, oder ein Laubsauger, oder ein Reinigungsgerät, oder ein Hochdruckreiniger, oder eine Kehrwalze, oder eine Kehrbürste, oder ein Rasenmäher, insbesondere ein Rasenmähroboter, oder ein Freischneider, oder ein Vertikutierer sein. Weiter zusätzlich oder alternativ kann das Bearbeitungsgerät einen Elektroantriebsmotor und/oder einen Verbrennungsantriebsmotor aufweisen.

In einer Weiterbildung der Erfindung ist der Inertialsensor ein Beschleunigungs- und/oder Drehratensensor. Die Inertialgröße ist eine Beschleunigung und/oder eine Drehrate. Insbesondere kann der Inertialsensor entweder nur ein Beschleunigungssensor oder ein Beschleunigungs- und Drehratensensor sein und/oder entweder kann die Inertialgröße nur eine Beschleunigung oder eine Beschleunigung und eine Drehrate sein. Zusätzlich oder alternativ kann der Beschleunigungssensor als g-Sensor bezeichnet werden.

In einer Weiterbildung der Erfindung ist das Bewegungs-Kriterium, dass die Inertialgröße oder die Größe gleich oder größer bzw. höher als ein, insbesondere vorgegebener, Bewegungs-Grenzwert ist. Das Schädigungs-Kriterium ist, dass die Inertialgröße oder die Größe gleich oder größer bzw. höher als ein, insbesondere vorgegebener, Schädigungs-Grenzwert, insbesondere ein Schlag-Grenzwert, ist. Der Schädigungs-Grenzwert ist größer bzw. höher, insbesondere minimal zweimal, insbesondere minimal fünfmal, insbesondere minimal zehnmal, größer, als der Bewegungs-Grenzwert. Dies ermöglicht eine, insbesondere die, Schädigung von einer, insbesondere weiteren, Bewegung, unterscheiden zu können.

In einer Weiterbildung der Erfindung ist das Bewegungs-Kriterium, dass die Inertialgröße oder die Größe gleich oder größer bzw. höher als ein, insbesondere vorgegebener und/oder der, Bewegungs-Grenzwert ist. Der Bewegungs-Grenzwert ist für eine, insbesondere die, Beschleunigung von minimal 0,005 g (Erdbeschleunigung und/oder 1 g = 9,81 m/s² (Meter pro Sekunde zum Quadrat)) und/oder maximal 0,5 g, insbesondere 0,015 g, charakteristisch. Zusätzlich oder alternativ ist das Schädigungs-Kriterium, dass die Inertialgröße oder die Größe gleich oder größer bzw. höher als ein, insbesondere vorgegebener und/oder der, Schädigungs-Grenzwert, insbesondere ein Schlag-Grenzwert, ist. Der Schädigungs-Grenzwert ist für eine, insbesondere die, Beschleunigung von größer als 0,5 g, insbesondere von minimal 2 g, und/oder maximal 20 g, insbesondere 5 g, charakteristisch. Der Bewegungs-Grenzwert ermöglicht das Erfassen bzw. Erkennen einer, insbesondere typischen, Bewegung. Zusätzlich oder alternativ ermöglicht der Schädigungs-Grenzwert das Erfassen bzw. Erkennen einer, insbesondere typischen, Schädigung. Insbesondere kann die Inertialgröße oder die Größe ohne die natürliche Erdbeschleunigung von 1 g sein bzw. diese kann kompensiert bzw. berücksichtigt, insbesondere abgezogen, sein.

In einer Weiterbildung der Erfindung wird in dem Bewegungs-Überwachungs-Betriebsmodus die Inertialgröße mit einer, insbesondere vorgegebenen, Bewegungs-Abtastrate, insbesondere einem Wert der Bewegungs-Abtastrate, bzw. Bewegungs-Abtastfrequenz erfasst. In dem Schädigungs-Überwachungs-Betriebsmodus wird die Inertialgröße mit einer, insbesondere vorgegebenen, Schädigungs-Abtastrate, insbesondere einem Wert der Schädigungs-Abtastrate und/oder einer Schlag-Abtastrate, bzw. Schädigungs-Abtastfrequenz erfasst. Die Schädigungs-Abtastrate ist größer bzw. höher, insbesondere minimal zweimal größer, als die Bewegungs-Abtastrate. Dies ermöglicht eine, insbesondere die, Schädigung von einer, insbesondere weiteren, Bewegung, unterscheiden zu können. Insbesondere kann typischerweise die Schädigung zeitlich kürzer als die Bewegung sein. Somit ermöglicht dies das energieverbrauchsoptimierte Erfassen bzw. Erkennen der Bewegung und der Schädigung. Insbesondere kann der Bewegungs-Überwachungs-Betriebsmodus als Low-Power-Modus bezeichnet werden. Zusätzlich oder alternativ kann der Schädigungs-Überwachungs-Betriebsmodus als Normal-Power-Modus bezeichnet werden.

In einer Weiterbildung der Erfindung wird in dem Bewegungs-Überwachungs-Betriebsmodus die Inertialgröße mit einer, insbesondere vorgegebenen und/oder der, Bewegungs-Abtastrate, insbesondere mit einem Wert der Bewegungs-Abtastrate, bzw. Bewegungs-Abtastfrequenz erfasst. Die Bewegungs-Abtastrate ist minimal 1 Hz (Hertz) und/oder maximal 50 Hz, insbesondere 25 Hz. Zusätzlich oder alternativ wird in dem Schädigungs-Überwachungs-Betriebsmodus die Inertialgröße mit einer, insbesondere vorgegebenen und/oder der, Schädigungs-Abtastrate, insbesondere einem Wert der Schädigungs-Abtastrate und/oder einer Schlag-Abtastrate, bzw. Schädigungs-Abtastfrequenz erfasst. Die Schädigungs-Abtastrate ist größer bzw. höher als 50 Hz und/oder maximal 1000 Hz, insbesondere 100 Hz. Die Bewegungs-Abtastrate ermöglicht das Erfassen bzw. Erkennen einer, insbesondere typischen, Bewegung. Zusätzlich oder alternativ ermöglicht die Schädigungs-Abtastrate das Erfassen bzw. Erkennen einer, insbesondere typischen, Schädigung. Somit ermöglicht dies das energieverbrauchsoptimierte Erfassen bzw. Erkennen der Bewegung und der Schädigung. Insbesondere kann der Bewegungs-Überwachungs-Betriebsmodus als Low-Power-Modus bezeichnet werden. Zusätzlich oder alternativ kann der Schädigungs-Überwachungs-Betriebsmodus als Normal-Power-Modus bezeichnet werden.

In einer Weiterbildung der Erfindung umfasst bzw. weist das Verfahren auf: Falls mindestens das Schädigungs-Kriterium, insbesondere ein Bleibe-Kriterium, insbesondere ein Wert des Bleibe-Kriteriums, insbesondere durch die Inertialgröße oder eine auf der Inertialgröße basierende Größe, nicht erfüllt ist und eine, insbesondere vorgegebene, Zeitdauer, insbesondere ein Wert der Zeitdauer, seit der Erfüllung des Bewegungs-Kriteriums und/oder einem Anfang bzw. Beginn des Betreibens in dem Schädigungs-Überwachungs-Betriebsmodus abgelaufen bzw. erreicht ist, Betreiben, insbesondere automatisches Betreiben, der Inertialsensoreinrichtung in dem Bewegungs-Überwachungs-Betriebsmodus, insbesondere wieder. Dies ermöglicht einen Wechsel bzw. ein Versetzen von dem Betreiben der Inertialsensoreinrichtung in dem Schädigungs-Überwachungs-Betriebsmodus zu dem Betreiben der Inertialsensoreinrichtung in dem Bewegungs-Überwachungs-Betriebsmodus, insbesondere falls auf die Bewegung eine Schädigung nicht zeitlich nachfolgt. Insbesondere kann die Inertialsensoreinrichtung selbst bzw. alleine, insbesondere ohne die Steuereinrichtung, von dem Betreiben in dem Schädigungs-Überwachungs-Betriebsmodus zu dem Betreiben in dem Bewegungs-Überwachungs-Betriebsmodus wechseln bzw. sich versetzen. Zusätzlich oder alternativ kann das Bleibe-Kriterium von dem Bewegungs-Kriterium und/oder dem Schädigungs-Kriterium verschieden sein. Weiter zusätzlich oder alternativ kann das Bleibe-Kriterium sein, dass die Inertialgröße oder die Größe gleich oder größer bzw. höher als ein, insbesondere vorgegebener, Bleibe-Grenzwert ist. Insbesondere kann der Bleibe-Grenzwert größer bzw. höher, insbesondere minimal zweimal größer, als der Bewegungs-Grenzwert und/oder kleiner bzw. niedriger als der Schädigungs-Grenzwert sein. Zusätzlich oder alternativ kann der Bleibe-Grenzwert für eine, insbesondere die, Beschleunigung von 0,04 g charakteristisch sein. Weiter zusätzlich oder alternativ kann die Zeitdauer minimal 1 Sekunde (s), insbesondere minimal 2 s, insbesondere minimal 5 s, und/oder maximal 120 s, insbesondere maximal 60 s, insbesondere maximal 30 s, insbesondere 10 s, sein. Weiter zusätzlich oder alternativ kann, solange das Bleibe-Kriterium, soweit vorgesehen, oder sogar das Schädigungs-Kriterium erfüllt ist und/oder die Zeitdauer nicht abgelaufen ist, die Inertialsensoreinrichtung in dem Schädigungs-Überwachungs-Betriebsmodus betrieben werden.

In einer Weiterbildung der Erfindung umfasst bzw. weist der Schritt c) auf: Übertragen, insbesondere automatisches Übertragen, des Schädigungs-Signals, insbesondere in Form eines Interrupt- bzw. Unterbrechungs-Signals, von der Inertialsensoreinrichtung zu der Steuereinrichtung. Dies ermöglicht das Betreiben der Steuereinrichtung in Abhängigkeit von dem übertragenen Schädigungs-Signal und/oder, dass die Steuereinrichtung, insbesondere periodisch bzw. zyklisch, bei der Inertialsensoreinrichtung nicht nachfragen bzw. ein Polling nicht betreiben braucht oder kann. Somit ermöglicht dies ein energieverbrauchsarmes Betreiben der Steuereinrichtung, insbesondere der Einrichtung.

In einer Weiterbildung der Erfindung umfasst bzw. weist die Einrichtung eine, insbesondere elektrische, Speichereinrichtung und/oder eine, insbesondere elektrische, Ausgabe- und/oder Übertragungseinrichtung auf. Der Schritt c), insbesondere das Betreiben der Steuereinrichtung, umfasst bzw. weist auf: Übertragen, insbesondere automatisches Übertragen, des Schädigungs-Signals oder einer Schädigungs-Information, insbesondere einen Wert der Schädigungs-Information und/oder einer Schlag-Information, insbesondere basierend auf dem Schädigungs-Signal und/oder der Inertialgröße oder der Größe und/oder mittels der Steuereinrichtung erzeugt bzw. generiert, mittels der Steuereinrichtung an die Speichereinrichtung zum, insbesondere automatischen, Speichern und/oder, insbesondere von der Speichereinrichtung, an die Ausgabe- und/oder Übertragungseinrichtung zum, insbesondere automatischen, Ausgeben und/oder, insbesondere automatischen und/oder kabellosen, Übertragen an ein, insbesondere elektrisches, externes Gerät des Schädigungs-Signals oder der Schädigungs-Information oder einer auf dem Schädigungs-Signal oder der Schädigungs-Information basierenden Information, insbesondere eines Werts der Information, insbesondere in Abhängigkeit von dem übertragenen Schädigungs-Signal. Dies ermöglicht ein Wahrnehmen der Schädigung, insbesondere durch einen Eigentümer und/oder einen Reparateur des Bearbeitungsgeräts. Somit ermöglicht dies ein Überprüfen des Bearbeitungsgeräts darauf hin, insbesondere durch den Eigentümer und/oder den Reparateur, ob ein tatsächlicher Schaden des Bearbeitungsgeräts, insbesondere verursacht durch die Schädigung, vorliegt, insbesondere oder nicht, und ggf. eine Reparatur des Bearbeitungsgeräts bzw. eine Beseitigung des Schadens. Insbesondere kann die Speichereinrichtung von der Inertialsensoreinrichtung und/oder der Steuereinrichtung und/oder der Ausgabe- und/oder Übertragungseinrichtung und/oder dem Gerät verschieden sein. Zusätzlich oder alternativ kann die Speichereinrichtung nicht-flüchtig sein. Weiter zusätzlich oder alternativ kann die Ausgabe- und/oder Übertragungseinrichtung von der Inertialsensoreinrichtung und/oder der Steuereinrichtung und/oder der Speichereinrichtung und/oder dem Gerät verschieden sein. Weiter zusätzlich oder alternativ kann das Ausgeben optisch, akustisch und/oder haptisch sein. Weiter zusätzlich oder alternativ kann das Übertragen per Bluetooth sein. Weiter zusätzlich oder alternativ kann das Gerät von der Einrichtung und/oder dem Bearbeitungsgerät verschieden, insbesondere getrennt bzw. separat ausgebildet, sein. Weiter zusätzlich oder alternativ kann das Gerät mobil bzw. portabel, insbesondere handgetragen, und/oder ein Smartphone sein.

In einer Weiterbildung der Erfindung ist die Steuereinrichtung meistens bzw. mindestens einen Großteil der Zeit, insbesondere die ganze Zeit, in einem Energiespar-Zustand, insbesondere einem Inaktiv-Zustand bzw. Schlaf-Zustand, während des Schritts a) und/oder des Schritts b). Der Schritt c) umfasst bzw. weist auf: Versetzen, insbesondere automatisches Versetzen, bzw. Wechseln der Steuereinrichtung von dem Energiespar-Zustand in einen Aktiv-Zustand bzw. Wach-Zustand in Abhängigkeit von dem übertragenen Schädigungs-Signal. Dies ermöglicht ein energieverbrauchsarmes Betreiben der Steuereinrichtung, insbesondere der Einrichtung. Insbesondere können der Energiespar-Zustand und der Aktiv-Zustand verschieden sein. Insbesondere kann der Energiespar-Zustand energieverbrauchsarmer als der Aktiv-Zustand sein. Zusätzlich oder alternativ kann Großteil der Zeit mehr als 50 % (Prozent), insbesondere minimal 60 %, insbesondere minimal 70 %, insbesondere minimal 80 %, insbesondere minimal 90 %, insbesondere minimal 95 %, insbesondere minimal 99 %, der Zeit bedeuten. Weiter zusätzlich oder alternativ kann das Versetzen von dem Energiespar-Zustand in den Aktiv-Zustand als Aufwecken bezeichnet werden. Weiter zusätzlich oder alternativ kann zeitlich nach dem Schritt c) die Steuereinrichtung von dem Aktiv-Zustand in den Energiespar-Zustand, insbesondere wieder, versetzt werden bzw. wechseln.

In einer Weiterbildung der Erfindung umfasst bzw. weist die Einrichtung, insbesondere nur, einen, insbesondere einzigen, elektrischen Energiespeicher, insbesondere eine Batterie, auf. Insbesondere nur, dem Energiespeicher wird elektrische Energie zum Betreiben der Inertialsensoreinrichtung und der Steuereinrichtung, insbesondere automatisch, entnommen, insbesondere falls bzw. solange die Einrichtung, insbesondere die Inertialsensoreinrichtung und die Steuereinrichtung, dem Bearbeitungsgerät Energie nicht entnehmen kann, insbesondere können. Dies ermöglicht unabhängig von einem Betriebsfähigkeitszustand des Bearbeitungsgeräts, insbesondere einem Ein-Zustand eines Antriebsmotors des Bearbeitungsgeräts, das Erfassen bzw. Erkennen der Schädigung. Insbesondere kann dem Bearbeitungsgerät mindestens bei einem Aus-Zustand eines Antriebsmotors des Bearbeitungsgeräts, insbesondere bei einem Betriebsunfähigkeitszustand des Bearbeitungsgeräts, Energie nicht entnommen werden. Insbesondere kann der Betriebsunfähigkeitszustand durch ein Nichtvorhandensein einer Antriebsenergiequelle, insbesondere einem Nichtverbundensein mit einem Antriebsakkumulator, verursacht sein. Zusätzlich oder alternativ ermöglicht das Verfahren Energie des Energiespeichers zu sparen und somit eine Lebensdauer des Energiespeichers zu verlängern. Insbesondere kann der Energiespeicher wiederaufladbar sein.

In einer Ausgestaltung der Erfindung umfasst bzw. weist der Energiespeicher einen maximalen Energieinhalt von minimal 10 mWh (Milli-Wattstunden) und/oder maximal 20 Wh (Wattstunden), insbesondere 2 Wh, auf. Zusätzlich oder alternativ ist der Energiespeicher, insbesondere nur, eine, insbesondere einzige, Zelle, insbesondere eine Knopfzelle. Somit hat bzw. weist der Energiespeicher einen kleinen bzw. niedrigen Energieinhalt auf. Insbesondere kann die Knopfzelle eine CR 2032-Knopfzelle oder eine CR 2450-Knopfzelle sein. Zusätzlich oder alternativ kann die Zelle eine Rundzelle, insbesondere eine 14500-Rundzelle, und/oder eine Pouchzelle sein. Weiter zusätzlich oder alternativ kann die Zelle eine Li-Ion-Zelle sein. Weiter zusätzlich oder alternativ kann die Zelle eine Sekundärzelle und/oder wiederaufladbar sein.

In einer Weiterbildung der Erfindung ist der mindestens eine Inertialsensor zum, insbesondere automatischen, Erfassen mindestens einer Inertialgröße in einer Mehrzahl von, insbesondere verschiedenen, insbesondere zueinander orthogonalen, Richtungen ausgebildet bzw. konfiguriert. Das Verfahren umfasst bzw. weist, insbesondere den Schritt, auf: Bestimmen, insbesondere automatisches Bestimmen, einer Schädigungs-Richtungs-Information, insbesondere eines Werts der Schädigungs-Richtungs-Information und/oder einer Schlag-Richtungs-Information, basierend auf der mindestens einen, insbesondere erfassten, Inertialgröße in den Richtungen. Dies ermöglicht ein gezieltes Überprüfen des Bearbeitungsgeräts auf einen, insbesondere tatsächlichen, Schaden des Bearbeitungsgeräts und/oder eine gezielte Reparatur des Bearbeitungsgeräts bzw. eine gezielte Beseitigung des Schadens. Insbesondere kann die Schlag-Richtungs-Information eine Stelle und/oder eine Komponente des Bearbeitungsgeräts aufweisen, insbesondere sein.

Die erfindungsgemäße Einrichtung ist zur Anordnung, insbesondere Befestigung, an, insbesondere in, einem, insbesondere dem, mobilen motorangetriebenen Bearbeitungsgerät ausgebildet bzw. konfiguriert, insbesondere angeordnet, insbesondere befestigt. Die Einrichtung weist eine, insbesondere die, Inertialsensoreinrichtung und eine, insbesondere die, Steuereinrichtung auf. Die Inertialsensoreinrichtung weist mindestens einen, insbesondere den, Inertialsensor auf. Der Inertialsensor ist zum Erfassen einer, insbesondere der, Inertialgröße ausgebildet bzw. konfiguriert. Die Einrichtung ist dazu ausgebildet: Zum Betreiben der Inertialsensoreinrichtung in einem, insbesondere dem, Bewegungs-Überwachungs-Betriebsmodus zum Überwachen, ob die Inertialgröße oder eine, insbesondere die, auf der Inertialgröße basierende Größe ein, insbesondere das, Bewegungs-Kriterium erfüllt. Das Bewegungs-Kriterium ist für eine, insbesondere die, Bewegung des Bearbeitungsgeräts charakteristisch. Falls das Bewegungs-Kriterium erfüllt ist, zum Betreiben der Inertialsensoreinrichtung in einem, insbesondere dem, Schädigungs-Überwachungs-Betriebsmodus zum Überwachen, ob die Inertialgröße oder eine, insbesondere die, auf der Inertialgröße basierende Größe ein, insbesondere das, Schädigungs-Kriterium erfüllt. Das Schädigungs-Kriterium ist für eine, insbesondere die, Schädigung des Bearbeitungsgeräts charakteristisch. Falls das Schädigungs-Kriterium erfüllt ist, zum Übertragen eines, insbesondere des, Schädigungs-Signals mittels der Inertialsensoreinrichtung und zum Betreiben der Steuereinrichtung in Abhängigkeit von dem übertragenen Schädigungs-Signal. Die Einrichtung kann mindestens einen Teil oder sogar alle Vorteile wie vorhergehend für das Verfahren genannt ermöglichen. Insbesondere kann die Einrichtung zum, insbesondere automatischen, Ausführen eines, insbesondere des, vorhergehend genannten Verfahrens ausgebildet bzw. konfiguriert sein. Zusätzlich oder alternativ kann die Einrichtung, insbesondere können/kann die Inertialsensoreinrichtung und/oder die Steuereinrichtung, insbesondere jeweils, wie für das Verfahren vorhergehend genannt mindestens teilweise oder sogar ganz ausgebildet bzw. konfiguriert sein.

Das erfindungsgemäße System umfasst bzw. weist eine, insbesondere die, Einrichtung wie vorhergehend genannt und das Bearbeitungsgerät auf. Insbesondere kann das Bearbeitungsgerät wie für das Verfahren vorhergehend genannt mindestens teilweise oder sogar ganz ausgebildet bzw. konfiguriert sein.

Zusätzlich oder alternativ kann ein, insbesondere erfindungsgemäßes und/oder das, System das externe Gerät umfassen bzw. aufweisen. Insbesondere kann das Gerät wie für das Verfahren vorhergehend genannt mindestens teilweise oder sogar ganz ausgebildet bzw. konfiguriert sein.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: eine schematische Ansicht eines erfindungsgemäßen Systems aufweisend eine erfindungsgemäße Einrichtung und ein mobiles motorangetriebenes Bearbeitungsgerät und eines erfindungsgemäßen Verfahrens zum Betreiben der Einrichtung,
- Fig. 2: eine schematische Explosionsansicht der Einrichtung der Fig. 1,
- Fig. 3: ein Ablaufdiagramm des Verfahrens der Fig. 1,
- Fig. 4: ein weiteres Ablaufdiagramm des Verfahrens der Fig. 1,
- Fig. 5: ein Verlauf einer Inertialgröße zum Erfassen mittels einer Inertialsensoreinrichtung der Einrichtung der Fig. 1 über der Zeit, und
- Fig. 6: Erfassen mindestens einer Inertialgröße in einer Mehrzahl von Richtungen mittels der Inertialsensoreinrichtung der Einrichtung der Fig. 1 zum Bestimmen einer Schädigungs-Richtungs-Information mittels des Verfahrens der Fig. 1.

### DETAILLIERTE BESCHREIBUNG DER AUSFÜHRUNGSBEISPIELE

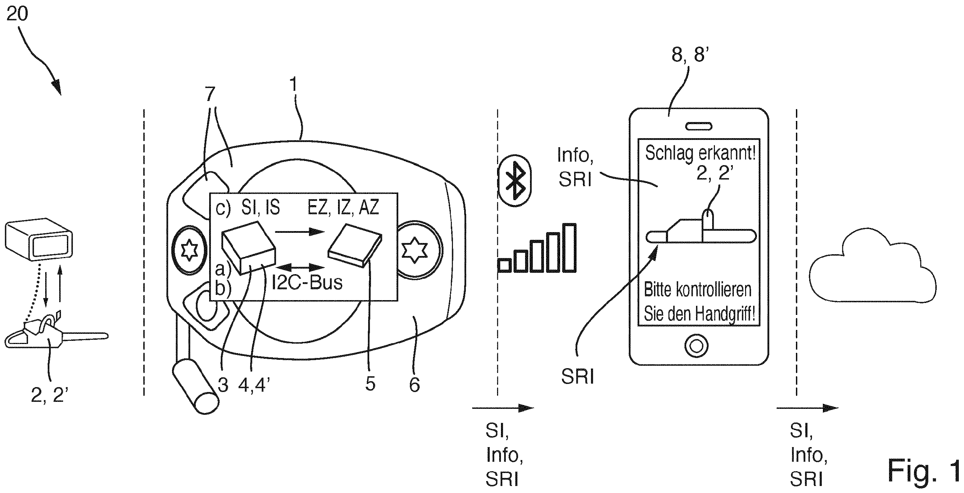

Fig. 1, 4 und 6 zeigen ein erfindungsgemäßes System 20. Das System 20 weist eine erfindungsgemäße Einrichtung 1 und ein mobiles motorangetriebenes Bearbeitungsgerät 2 auf.

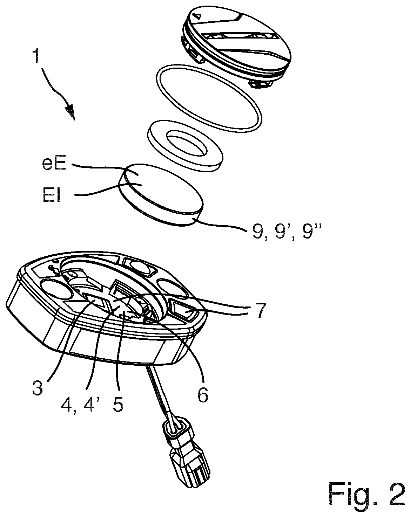

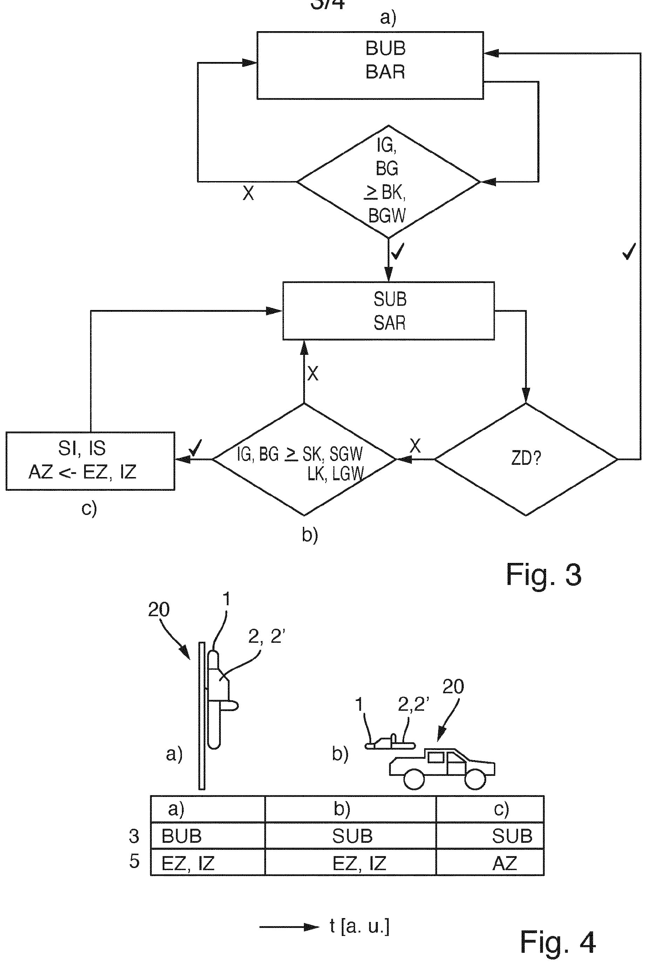

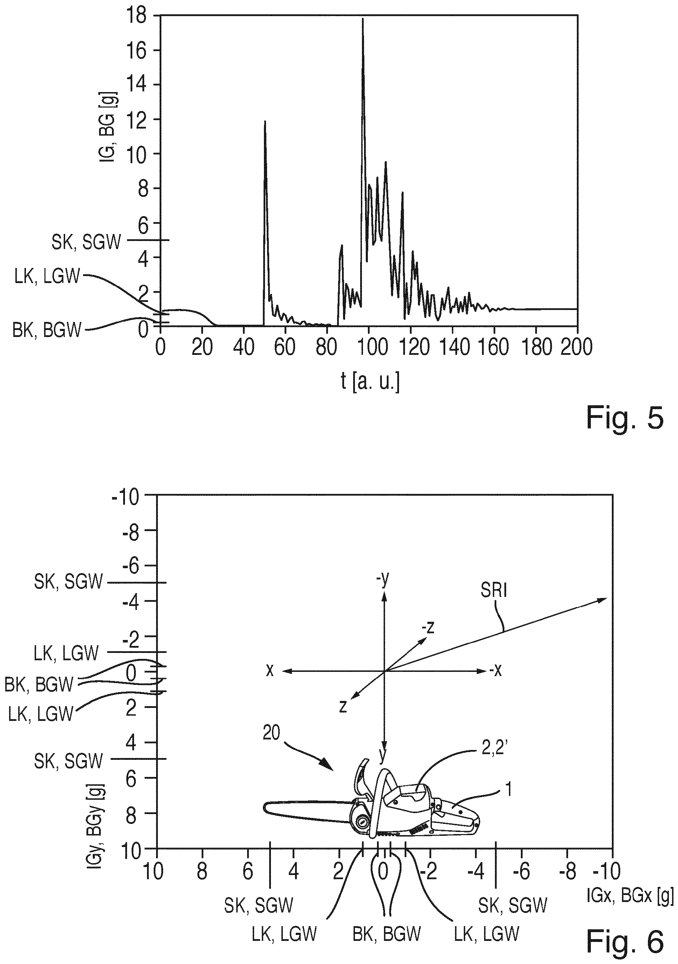

Die Einrichtung 1 ist zur Anordnung an dem Bearbeitungsgerät 2 ausgebildet, insbesondere angeordnet. Die Einrichtung weist eine Inertialsensoreinrichtung 3 und eine Steuereinrichtung 5 auf, wie in Fig. 1 und 2 gezeigt. Die Inertialsensoreinrichtung 3 weist mindestens einen Inertialsensor 4 auf. Der Inertialsensor 4 ist zum Erfassen einer Inertialgröße IG ausgebildet, insbesondere erfasst, wie in Fig. 5 und 6 gezeigt. Die Einrichtung 1 ist dazu ausgebildet: Zum Betreiben der Inertialsensoreinrichtung 3 in einem Bewegungs-Überwachungs-Betriebsmodus BUB zum Überwachen, insbesondere betreibt und überwacht, insbesondere jeweils, ob die Inertialgröße IG oder eine auf der Inertialgröße basierende Größe ein Bewegungs-Kriterium BK erfüllt, wie in Fig. 3 gezeigt. Das Bewegungs-Kriterium BK ist für eine Bewegung des Bearbeitungsgeräts 2 charakteristisch, wie in Fig. 4 gezeigt. Falls das Bewegungs-Kriterium BK erfüllt ist, zum Betreiben der Inertialsensoreinrichtung 3 in einem Schädigungs-Überwachungs-Betriebsmodus SUB zum Überwachen, insbesondere betreibt und überwacht, insbesondere jeweils, ob die Inertialgröße IG oder eine auf der Inertialgröße basierende Größe ein Schädigungs-Kriterium SK erfüllt. Das Schädigungs-Kriterium SK ist für eine Schädigung des Bearbeitungsgeräts 2 charakteristisch. Falls das Schädigungs-Kriterium SK erfüllt ist, zum Übertragen eines Schädigungs-Signals SI mittels der Inertialsensoreinrichtung 3 und zum Betreiben der Steuereinrichtung 5 in Abhängigkeit von dem übertragenen Schädigungs-Signal SI, insbesondere überträgt und betreibt, insbesondere jeweils.

Fig. 1, 3, 4 und 6 zeigen ein erfindungsgemäßes Verfahren zum Betreiben der Einrichtung 1. Die Einrichtung 1 ist an dem mobilen motorangetriebenen Bearbeitungsgerät 2 angeordnet. Die Einrichtung 1 weist die Inertialsensoreinrichtung 3 und die Steuereinrichtung 5 auf. Die Inertialsensoreinrichtung 3 weist mindestens den Inertialsensor 4 auf. Der Inertialsensor 4 ist zum Erfassen der Inertialgröße IG ausgebildet. Das Verfahren weist die Schritte auf: a) Betreiben der Inertialsensoreinrichtung 3 in dem Bewegungs-Überwachungs-Betriebsmodus BUB zum Überwachen, ob die Inertialgröße IG oder die auf der Inertialgröße basierende Größe das Bewegungs-Kriterium BK erfüllt. Das Bewegungs-Kriterium BK ist für eine, insbesondere die, Bewegung des Bearbeitungsgeräts 2 charakteristisch. b) falls das Bewegungs-Kriterium BK erfüllt ist, Betreiben der Inertialsensoreinrichtung 3 in dem Schädigungs-Überwachungs-Betriebsmodus SUB zum Überwachen, ob die Inertialgröße IG oder die auf der Inertialgröße basierende Größe das Schädigungs-Kriterium SK erfüllt. Das Schädigungs-Kriterium ist für eine, insbesondere die, Schädigung des Bearbeitungsgeräts 2 charakteristisch. c) falls das Schädigungs-Kriterium SK erfüllt ist, Übertragen des Schädigungs-Signals SI mittels der Inertialsensoreinrichtung 3 und Betreiben der Steuereinrichtung 5 in Abhängigkeit von dem übertragenen Schädigungs-Signal Sl.

In dem gezeigten Ausführungsbeispiel ist der Inertialsensor 4 ein Beschleunigungssensor 4', wie in Fig. 1 und 2 gezeigt. Die Inertialgröße IG ist eine Beschleunigung BG, wie in Fig. 5 und 6 gezeigt. In alternativen Ausführungsbeispielen kann der Inertialsensor zusätzlich oder alternativ ein Drehratensensor sein und/oder die Inertialgröße kann zusätzlich oder alternativ eine Drehrate sein.

Des Weiteren ist das Bewegungs-Kriterium BK, dass die Inertialgröße IG oder die Größe gleich oder größer als ein Bewegungs-Grenzwert BGW ist, wie in Fig. 3 und 5 gezeigt. Das Schädigungs-Kriterium SK ist, dass die Inertialgröße IG oder die Größe gleich oder größer als ein Schädigungs-Grenzwert SGW ist.

Im Detail ist der Schädigungs-Grenzwert SGW größer, insbesondere minimal zweimal, in dem gezeigten Ausführungsbeispiel minimal zehnmal, größer, als der Bewegungs-Grenzwert BGW.

Zusätzlich oder alternativ ist der Bewegungs-Grenzwert BGW für eine, insbesondere die, Beschleunigung von maximal 0,5 g, in dem gezeigten Ausführungsbeispiel 0,015 g, charakteristisch.

Weiter zusätzlich oder alternativ ist der Schädigungs-Grenzwert SGW für eine, insbesondere die, Beschleunigung von größer als 0,5 g, in dem gezeigten Ausführungsbeispiel 5 g, charakteristisch.

Außerdem wird in dem Bewegungs-Überwachungs-Betriebsmodus BUB die Inertialgröße IG mit einer Bewegungs-Abtastrate BAR erfasst, wie in Fig. 3 gezeigt. In dem Schädigungs-Überwachungs-Betriebsmodus SUB wird die Inertialgröße IG mit einer Schädigungs-Abtastrate SAR erfasst.

Im Detail ist die Schädigungs-Abtastrate SAR größer, insbesondere minimal zweimal, in dem gezeigten Ausführungsbeispiel viermal, größer, als die Bewegungs-Abtastrate BAR.

Zusätzlich oder alternativ ist die Bewegungs-Abtastrate BAR maximal 50 Hz, in dem gezeigten Ausführungsbeispiel 25 Hz.

Weiter zusätzlich oder alternativ ist die Schädigungs-Abtastrate SAR größer als 50 Hz, in dem gezeigten Ausführungsbeispiel 100 Hz.

Zudem weist das Verfahren auf: Falls mindestens das Schädigungs-Kriterium SK, insbesondere ein Bleibe-Kriterium LK, insbesondere durch die Inertialgröße IG oder eine auf der Inertialgröße basierende Größe, nicht erfüllt ist und eine Zeitdauer ZD seit der Erfüllung des Bewegungs-Kriteriums BK und/oder einem Anfang des Betreibens in dem Schädigungs-Überwachungs-Betriebsmodus SUB abgelaufen ist, Betreiben der Inertialsensoreinrichtung 3 in dem Bewegungs-Überwachungs-Betriebsmodus BUB, wie in Fig. 3 gezeigt.

In dem gezeigten Ausführungsbeispiel ist das Bleibe-Kriterium LK, dass die Inertialgröße IG oder die Größe gleich oder größer als ein Bleibe-Grenzwert LGW ist, wie in Fig. 3 und 5 gezeigt. Im Detail ist der Bleibe-Grenzwert LGW größer, insbesondere minimal zweimal größer, als der Bewegungs-Grenzwert BGW und/oder kleiner als der Schädigungs-Grenzwert SGW. Zusätzlich oder alternativ ist der Bleibe-Grenzwert LGW für eine, insbesondere die, Beschleunigung von 0,04 g charakteristisch.

Des Weiteren ist die Zeitdauer ZD 10 s.

Außerdem weist der Schritt c) auf: Übertragen des Schädigungs-Signals SI, in dem gezeigten Ausführungsbeispiel in Form eines Interrupt-Signals IS, von der Inertialsensoreinrichtung 3 zu der Steuereinrichtung 5, wie in Fig. 1 und 2 gezeigt.

Weiter weist die Einrichtung 1 eine Speichereinrichtung 6 und/oder eine Ausgabe- und/oder Übertragungseinrichtung 7 auf, wie in Fig. 1 und 2 gezeigt. Der Schritt c) weist auf: Übertragen des Schädigungs-Signals SI oder einer Schädigungs-Information Info, insbesondere basierend auf dem Schädigungs-Signal SI und/oder der Inertialgröße IG oder der Größe und/oder mittels der Steuereinrichtung 5 erzeugt, mittels der Steuereinrichtung 5 an die Speichereinrichtung 6 zum Speichern und/oder an die Ausgabe- und/oder Übertragungseinrichtung 7 zum Ausgeben und/oder, insbesondere kabellosen, Übertragen an ein externes Gerät 8 des Schädigungs-Signals SI oder der Schädigungs-Information Info oder einer auf dem Schädigungs-Signal oder der Schädigungs-Information basierenden Information.

In dem gezeigten Ausführungsbeispiel ist das Ausgeben optisch, insbesondere mittels Anzeigens einer Gefahrenfarbe und/oder rot.

Zudem gibt das Gerät 8 das, insbesondere übertragene, Schädigungs-Signal SI oder die, insbesondere übertragene, Schädigungs-Information Info oder die, insbesondere übertragene, Information aus und/oder überträgt, insbesondere kabellos, diese, insbesondere weiter, insbesondere an eine, insbesondere elektronische, Datenbank, z.B. eine Cloud.

Des Weiteren weist das System 20 das Gerät 8, in dem gezeigten Ausführungsbeispiel in Form eines Smartphones 8', und/oder die Datenbank auf.

Außerdem ist die Steuereinrichtung 5 mindestens einen Großteil der Zeit, in dem gezeigten Ausführungsbeispiel die ganze Zeit, in einem Energiespar-Zustand EZ, insbesondere einem Inaktiv-Zustand IZ, während des Schritts a) und/oder des Schritts b), wie in Fig. 3 und 4 gezeigt. Der Schritt c) weist auf: Versetzen der Steuereinrichtung 5 von dem Energiespar-Zustand EZ in einen Aktiv-Zustand AZ in Abhängigkeit von dem übertragenen Schädigungs-Signal SI, in dem gezeigten Ausführungsbeispiel in Form des Interrupt-Signals IS.

In dem gezeigten Ausführungsbeispiel wechselt bzw. wird zeitlich nach dem Schritt c) die Steuereinrichtung 5 von dem Aktiv-Zustand AZ in den Energiespar-Zustand EZ versetzt, insbesondere selbst.

Weiter wechselt die Inertialsensoreinrichtung 3 selbst von dem Betreiben in dem Bewegungs-Überwachungs-Betriebsmodus BUB zu dem Betreiben in dem Schädigungs-Überwachungs-Betriebsmodus SUB und/oder von dem Betreiben in dem Schädigungs-Überwachungs-Betriebsmodus SUB zu dem Betreiben in dem Bewegungs-Überwachungs-Betriebsmodus BUB. Dies ermöglicht, dass die Steuereinrichtung 5 die ganze Zeit in dem Energiespar-Zustand EZ während des Schritts a) und/oder des Schritts b) sein kann, insbesondere ist. In alternativen Ausführungsbeispielen kann die Steuereinrichtung die Inertialsensoreinrichtung von dem Betreiben in dem Bewegungs-Überwachungs-Betriebsmodus zu dem Betreiben in dem Schädigungs-Überwachungs-Betriebsmodus und/oder von dem Betreiben in dem Schädigungs-Überwachungs-Betriebsmodus zu dem Betreiben in dem Bewegungs-Überwachungs-Betriebsmodus versetzen bzw. umkonfigurieren bzw. umparametrisieren, insbesondere mittels des in Fig. 1 gezeigten I2C-Bus (Inter Integrated Circuit Bus). Insbesondere kann die Steuereinrichtung, insbesondere dazu, an einem Anfang und/oder einem Ende des Schritts a) und/oder des Schritts b) in dem Aktiv-Zustand sein, insbesondere und ansonsten in dem Energiespar-Zustand.

Zudem weist die Einrichtung 1 einen elektrischen Energiespeicher 9 auf, wie in Fig. 2 gezeigt. Dem Energiespeicher 9 wird elektrische Energie eE zum Betreiben der Inertialsensoreinrichtung 3 und der Steuereinrichtung 5 entnommen.

Im Detail weist der Energiespeicher 9 einen maximalen Energieinhalt EI von maximal 20 Wh, in dem gezeigten Ausführungsbeispiel 2 Wh, auf.

Zusätzlich oder alternativ ist der Energiespeicher 9 eine Zelle 9', in dem gezeigten Ausführungsbeispiel eine Knopfzelle 9".

Des Weiteren ist der mindestens eine Inertialsensor 4 zum Erfassen mindestens einer Inertialgröße IGx, IGy, IGz in einer Mehrzahl von, in dem gezeigten Ausführungsbeispiel drei und/oder zueinander orthogonalen, Richtungen x, y, z ausgebildet, insbesondere erfasst, wie in Fig. 6 gezeigt. Das Verfahren weist auf: Bestimmen einer Schädigungs-Richtungs-Information SRI basierend auf der mindestens einen Inertialgröße IGx, IGy, IGz in den Richtungen x, y, z, insbesondere mittels der Steuereinrichtung 5 und/oder des Geräts 8 und/oder, insbesondere woanders, extern.

In dem gezeigten Ausführungsbeispiel weist die Schlag-Richtungs-Information SRI eine Stelle und/oder eine Komponente des Bearbeitungsgeräts 2 auf, wie in Fig. 1 und 6 gezeigt.

Außerdem weist die Schädigungs-Information Info die Schlag-Richtungs-Information SRI auf, insbesondere ist die Schlag-Richtungs-Information SRI.

Weiter wird in dem Bewegungs-Überwachungs-Betriebsmodus BUB überwacht, ob die mindestens eine Inertialgröße IGx, IGy, IGz in mindestens einer der Richtungen x, y, z oder die auf der mindestens einen Inertialgröße basierende Größe das Bewegungs-Kriterium BK erfüllt.

Zudem wird in dem Schädigungs-Überwachungs-Betriebsmodus SUB überwacht, ob die mindestens eine Inertialgröße IGx, IGy, IGz in mindestens einer der Richtungen x, y, z oder die auf der mindestens einen Inertialgröße basierende Größe das Schädigungs-Kriterium SK erfüllt.

Des Weiteren wird in dem Schädigungs-Überwachungs-Betriebsmodus SUB überwacht, ob die mindestens eine Inertialgröße IGx, IGy, IGz in mindestens einer der Richtungen x, y, z oder die auf der mindestens einen Inertialgröße basierende Größe das Bleibe-Kriterium LK erfüllt.

Außerdem wird die Schädigungs-Richtungs-Information SRI mittels Bildens eines Größenvektors basierend auf der mindestens einen Inertialgröße IGx, IGy, IGz in den Richtungen x, y, z, Vergleichens des, insbesondere gebildeten, Größenvektors mit Normalenvektoren, insbesondere mittels Bildens eines, insbesondere jeweiligen, Skalarproduktes, und basierend auf einem besten Ergebnis des Vergleichens, insbesondere eines maximalen, insbesondere positiven, Skalarproduktes, bestimmt.

Weiter ist das Bearbeitungsgerät 2 eine Säge 2'. In alternativen Ausführungsbeispielen kann das Bearbeitungsgerät ein Hoch-Entaster, oder eine Heckenschere, oder ein Heckenschneider, oder ein Gehölzschneider, oder eine Astschere, oder ein Blasgerät, oder ein Laubbläser, oder ein Sauggerät, oder ein Laubsauger, oder ein Reinigungsgerät, oder ein Hochdruckreiniger, oder eine Kehrwalze, oder eine Kehrbürste, oder ein Rasenmäher, insbesondere ein Rasenmähroboter, oder ein Freischneider, oder ein Vertikutierer sein.

Im Übrigen sind die Inertialsensoreinrichtung 3, insbesondere mindestens der Inertialsensor 4, und die Steuereinrichtung 5, insbesondere und die Speichereinrichtung 6 und/oder die Ausgabe- und/oder Übertragungseinrichtung 7 und/oder der Energiespeicher 9, insbesondere elektrisch verbunden, insbesondere galvanisch verbunden.

Wie in Fig. 4 links gezeigt, ist das Bearbeitungsgerät 2 und somit die Einrichtung 3 anfangs unbewegt bzw. in Ruhe, insbesondere gelagert. Somit ist das Bewegungs-Kriterium BK nicht erfüllt. Somit wird der Schritt a), insbesondere weiter ausgeführt, insbesondere wird die Inertialsensoreinrichtung 3 in dem Bewegungs-Überwachungs-Betriebsmodus BUB, insbesondere weiter, betrieben.

Zeitlich danach wird das Bearbeitungsgerät 2 und somit die Einrichtung 3 bewegt, insbesondere angehoben, insbesondere von einem Lagerort bzw. einer Lagerposition zu einem Fahrzeug. Somit ist eine, insbesondere die, Bewegung des Bearbeitungsgeräts 2 vorhanden. Somit ist das Bewegungs-Kriterium BK erfüllt. Somit wird der Schritt b) ausgeführt, insbesondere wird die Inertialsensoreinrichtung 3 in dem Schädigungs-Überwachungs-Betriebsmodus SUB betrieben, wie in Fig. 4 mittig gezeigt.

Zeitlich danach wird das Bearbeitungsgerät 2 und somit die Einrichtung 3 geworfen und trifft, insbesondere schlägt, auf, insbesondere auf eine Ladefläche des Fahrzeugs, bzw. geschädigt. Somit ist eine, insbesondere die, Schädigung des Bearbeitungsgeräts 2 vorhanden. Somit ist das Schädigungs-Kriterium SK erfüllt. Somit wird der Schritt c) ausgeführt, insbesondere wird das Schädigungs-Signal SI mittels der Inertialsensoreinrichtung 3 übertragen und die Steuereinrichtung 5 wird in Abhängigkeit von dem übertragenen Schädigungs-Signal SI betrieben, wie in Fig. 4 rechts gezeigt.

Dies ermöglicht ein Wahrnehmen der Schädigung, insbesondere durch einen Eigentümer, insbesondere einen Flottenmanager, und/oder einen Reparateur des Bearbeitungsgeräts.

Insbesondere kann der Flottenmanager sehen, wann welches Bearbeitungsgerät eine hohe Beschleunigung erfährt, und/oder, insbesondere somit, wann wer was macht, insbesondere wo, wie und/oder warum. Ggf. auch auf der Ladefläche des Fahrzeugs bei der Fahrt und/oder unter Fremdeinfluss- bzw. einwirkung. Somit kann der Eigentümer, insbesondere der Flottenmanager, insbesondere gezielt, schulen und/oder verwarnen.

Zusätzlich oder alternativ kann der Service bzw. der Reparateur sehen, wo die Schädigung, insbesondere der Schaden, herkommen könnte, z.B. wegen des Werfens und des Aufschlagens des Bearbeitungsgeräts, insbesondere auf die Ladefläche des Fahrzeugs oder einer langen Laufzeit oder zu wenig Wartung. Weiter zusätzlich oder alternativ kann der Service bzw. der Reparateur sehen, wo er nach dem Schaden suchen sollte. Dabei könnte die Schlagrichtung bzw. die Schädigungs-Richtungs-Information einen Indiz geben. Weiter zusätzlich oder alternativ kann der Service bzw. der Reparateur sehen, wann ein Bearbeitungsgerät für den Service eingefordert werden sollte, z.B. aufgrund einer Anzahl und/oder einer Intensität von Schädigungen, insbesondere Schlägen. Weiter zusätzlich oder alternativ kann der Service bzw. der Reparateur sehen, ob ein Schaden durch eine starke Schädigung, insbesondere einen starken Schlag, verursacht wurde, insbesondere und somit, ob eine Versicherung greift oder nicht.

Weiter zusätzlich oder alternativ kann ein Hersteller, insbesondere somit, erfahren, welche Schädigungen, insbesondere Schläge, häufig vorkommen. Somit kann der Hersteller ggf. konstruktive Verstärkungen vorsehen.

In alternativen Ausführungsbeispielen kann die Einrichtung zusätzlich eine Diebstahl-Erkennungs-Einrichtung, insbesondere aufweisend eine Positions-Bestimmungs-Einrichtung, zum Erkennen eines Diebstahls des Bearbeitungsgeräts aufweisen. Insbesondere falls das Bewegungs-Kriterium erfüllt sein kann, insbesondere ist, kann die Diebstahl-ErkennungsEinrichtung betrieben werden, insbesondere und ansonsten nicht.

Wie die gezeigten und oben erläuterten Ausführungsbeispiele deutlich machen, stellt die Erfindung ein vorteilhaftes Verfahren zum Betreiben einer Einrichtung, wobei die Einrichtung an einem mobilen motorangetriebenen Bearbeitungsgerät angeordnet ist, eine vorteilhafte Einrichtung, wobei die Einrichtung zur Anordnung an einem mobilen motorangetriebenen Bearbeitungsgerät ausgebildet ist, insbesondere angeordnet ist, und ein vorteilhaftes System aufweisend eine solche Einrichtung und das Bearbeitungsgerät bereit, wobei das Verfahren und die Einrichtung und somit das System jeweils verbesserte Eigenschaften aufweisen.

## Patentansprüche

1. Verfahren zum Betreiben einer Einrichtung (1), wobei die Einrichtung (1) an einem mobilen motorangetriebenen Bearbeitungsgerät (2) angeordnet ist, wobei die Einrichtung (1) aufweist:
- eine Inertialsensoreinrichtung (3), wobei die Inertialsensoreinrichtung (3) mindestens einen Inertialsensor (4) aufweist, wobei der Inertialsensor (4) zum Erfassen einer Inertialgröße (IG) ausgebildet ist, und
- eine Steuereinrichtung (5),
wobei das Verfahren die Schritte aufweist:
a) Betreiben der Inertialsensoreinrichtung (3) in einem Bewegungs-Überwachungs-Betriebsmodus (BUB) zum Überwachen, ob die Inertialgröße (IG) oder eine auf der Inertialgröße basierende Größe ein Bewegungs-Kriterium (BK) erfüllt, wobei das Bewegungs-Kriterium (BK) für eine Bewegung des Bearbeitungsgeräts (2) charakteristisch ist,
b) falls das Bewegungs-Kriterium (BK) erfüllt ist, Betreiben der Inertialsensoreinrichtung (3) in einem Schädigungs-Überwachungs-Betriebsmodus (SUB) zum Überwachen, ob die Inertialgröße (IG) oder eine auf der Inertialgröße basierende Größe ein Schädigungs-Kriterium (SK) erfüllt, wobei das Schädigungs-Kriterium (SK) für eine Schädigung des Bearbeitungsgeräts (2) charakteristisch ist, und
c) falls das Schädigungs-Kriterium (SK) erfüllt ist, Übertragen eines Schädigungs-Signals (SI) mittels der Inertialsensoreinrichtung (3) und Betreiben der Steuereinrichtung (5) in Abhängigkeit von dem übertragenen Schädigungs-Signal (SI).

2. Verfahren nach Anspruch 1,
- wobei der Inertialsensor (4) ein Beschleunigungs- und/oder Drehratensensor (4') ist, und wobei die Inertialgröße (IG) eine Beschleunigung (BG) und/oder eine Drehrate ist.

3. Verfahren nach einem der vorhergehenden Ansprüche,
- wobei das Bewegungs-Kriterium (BK) ist, dass die Inertialgröße (IG) oder die Größe gleich oder größer als ein Bewegungs-Grenzwert (BGW) ist,
- wobei das Schädigungs-Kriterium (SK) ist, dass die Inertialgröße (IG) oder die Größe gleich oder größer als ein Schädigungs-Grenzwert (SGW) ist, und
- wobei der Schädigungs-Grenzwert (SGW) größer, insbesondere minimal zweimal größer, als der Bewegungs-Grenzwert (BGW) ist.

4. Verfahren nach einem der vorhergehenden Ansprüche,
- wobei das Bewegungs-Kriterium (BK) ist, dass die Inertialgröße (IG) oder die Größe gleich oder größer als ein Bewegungs-Grenzwert (BGW) ist, wobei der Bewegungs-Grenzwert (BGW) für eine Beschleunigung von maximal 0,5 g, insbesondere 0,015 g, charakteristisch ist, und/oder
- wobei das Schädigungs-Kriterium (SK) ist, dass die Inertialgröße (IG) oder die Größe gleich oder größer als ein Schädigungs-Grenzwert (SGW) ist, wobei der Schädigungs-Grenzwert (SGW) für eine Beschleunigung von größer als 0,5 g, insbesondere 5 g, charakteristisch ist.

5. Verfahren nach einem der vorhergehenden Ansprüche,
- wobei in dem Bewegungs-Überwachungs-Betriebsmodus (BUB) die Inertialgröße (IG) mit einer Bewegungs-Abtastrate (BAR) erfasst wird,
- wobei in dem Schädigungs-Überwachungs-Betriebsmodus (SUB) die Inertialgröße (IG) mit einer Schädigungs-Abtastrate (SAR) erfasst wird,
- und wobei die Schädigungs-Abtastrate (SAR) größer, insbesondere minimal zweimal größer, als die Bewegungs-Abtastrate (BAR) ist.

6. Verfahren nach einem der vorhergehenden Ansprüche,
- wobei in dem Bewegungs-Überwachungs-Betriebsmodus (BUB) die Inertialgröße (IG) mit einer Bewegungs-Abtastrate (BAR) erfasst wird, wobei die Bewegungs-Abtastrate (BAR) maximal 50 Hz, insbesondere 25 Hz, ist, und/oder
- wobei in dem Schädigungs-Überwachungs-Betriebsmodus (SUB) die Inertialgröße (IG) mit einer Schädigungs-Abtastrate (SAR) erfasst wird, wobei die Schädigungs-Abtastrate (SAR) größer als 50 Hz, insbesondere 100 Hz, ist.

7. Verfahren nach einem der vorhergehenden Ansprüche, wobei das Verfahren aufweist:
- falls mindestens das Schädigungs-Kriterium (SK), insbesondere ein Bleibe-Kriterium (LK), nicht erfüllt ist und eine Zeitdauer (ZD) seit der Erfüllung des Bewegungs-Kriteriums (BK) und/oder einem Anfang des Betreibens in dem Schädigungs-Überwachungs-Betriebsmodus (SUB) abgelaufen ist, Betreiben der Inertialsensoreinrichtung (3) in dem Bewegungs-Überwachungs-Betriebsmodus (BUB).

8. Verfahren nach einem der vorhergehenden Ansprüche,
- wobei der Schritt c) aufweist: Übertragen des Schädigungs-Signals (SI), insbesondere in Form eines Interrupt-Signals (IS), von der Inertialsensoreinrichtung (3) zu der Steuereinrichtung (5).

9. Verfahren nach einem der vorhergehenden Ansprüche,
- wobei die Einrichtung (1) eine Speichereinrichtung (6) und/oder eine Ausgabe- und/oder Übertragungseinrichtung (7) aufweist, und
- wobei der Schritt c) aufweist: Übertragen des Schädigungs-Signals (SI) oder einer Schädigungs-Information (Info), insbesondere basierend auf dem Schädigungs-Signal (SI) und/oder der Inertialgröße (IG) oder der Größe und/oder mittels der Steuereinrichtung (5) erzeugt, mittels der Steuereinrichtung (5) an die Speichereinrichtung (6) zum Speichern und/oder an die Ausgabe- und/oder Übertragungseinrichtung (7) zum Ausgeben und/oder, insbesondere kabellosen, Übertragen an ein externes Gerät (8) des Schädigungs-Signals (SI) oder der Schädigungs-Information (Info) oder einer auf dem Schädigungs-Signal oder der Schädigungs-Information basierenden Information.

10. Verfahren nach einem der vorhergehenden Ansprüche,
- wobei die Steuereinrichtung (5) mindestens einen Großteil der Zeit in einem Energiespar-Zustand (EZ), insbesondere einem Inaktiv-Zustand (IZ), während des Schritts a) und/oder des Schritts b) ist, und
- wobei der Schritt c) aufweist: Versetzen der Steuereinrichtung (5) von dem Energiespar-Zustand (EZ) in einen Aktiv-Zustand (AZ) in Abhängigkeit von dem übertragenen Schädigungs-Signal (SI).

11. Verfahren nach einem der vorhergehenden Ansprüche,
- wobei die Einrichtung (1) einen elektrischen Energiespeicher (9) aufweist,
- wobei dem Energiespeicher (9) elektrische Energie (eE) zum Betreiben der Inertialsensoreinrichtung (3) und der Steuereinrichtung (5) entnommen wird.

12. Verfahren nach Anspruch 11,
- wobei der Energiespeicher (9) einen maximalen Energieinhalt (EI) von maximal 20 Wh, insbesondere 2 Wh, aufweist, und/oder
- wobei der Energiespeicher (9) eine Zelle (9'), insbesondere eine Knopfzelle (9"), ist.

13. Verfahren nach einem der vorhergehenden Ansprüche,
- wobei der mindestens eine Inertialsensor (4) zum Erfassen mindestens einer Inertialgröße (IGx, IGy, IGz) in einer Mehrzahl von, insbesondere zueinander orthogonalen, Richtungen (x, y, z) ausgebildet ist, und
- wobei das Verfahren aufweist: Bestimmen einer Schädigungs-Richtungs-Information (SRI) basierend auf der mindestens einen Inertialgröße (IG) in den Richtungen (x, y, z).

14. Einrichtung (1), insbesondere zum Ausführen eines Verfahrens nach einem der vorhergehenden Ansprüche,
- wobei die Einrichtung (1) zur Anordnung an einem mobilen motorangetriebenen Bearbeitungsgerät (2) ausgebildet ist, insbesondere angeordnet ist, und
- wobei die Einrichtung (1) aufweist:
- eine Inertialsensoreinrichtung (3), wobei die Inertialsensoreinrichtung (3) mindestens einen Inertialsensor (4) aufweist, wobei der Inertialsensor (4) zum Erfassen einer Inertialgröße (IG) ausgebildet ist, und
- eine Steuereinrichtung (5), und
wobei die Einrichtung (1) dazu ausgebildet ist:
- zum Betreiben der Inertialsensoreinrichtung (3) in einem Bewegungs-Überwachungs-Betriebsmodus (BUB) zum Überwachen, ob die Inertialgröße (IG) oder eine auf der Inertialgröße basierende Größe ein Bewegungs-Kriterium (BK) erfüllt, wobei das Bewegungs-Kriterium (BK) für eine Bewegung des Bearbeitungsgeräts (2) charakteristisch ist,
- falls das Bewegungs-Kriterium (BK) erfüllt ist, zum Betreiben der Inertialsensoreinrichtung (3) in einem Schädigungs-Überwachungs-Betriebsmodus (SUB) zum Überwachen, ob die Inertialgröße (IG) oder eine auf der Inertialgröße basierende Größe ein Schädigungs-Kriterium (SK) erfüllt, wobei das Schädigungs-Kriterium (SK) für eine Schädigung des Bearbeitungsgeräts (2) charakteristisch ist, und
- falls das Schädigungs-Kriterium (SK) erfüllt ist, zum Übertragen eines Schädigungs-Signals (SI) mittels der Inertialsensoreinrichtung (3) und zum Betreiben der Steuereinrichtung (5) in Abhängigkeit von dem übertragenen Schädigungs-Signal (SI).

15. System (20), wobei das System (20) aufweist:
- eine Einrichtung (1) nach Anspruch 14, und
- das Bearbeitungsgerät (2).
